# EUROPÄISCHE PATENTSCHRIFT

(11) **EP 1 296 993 B1**
(45) Veröffentlichungstag und Bekanntmachung des Hinweises auf die Patenterteilung: **26.01.2005**
(21) Anmeldenummer: 01949463.2
(22) Anmeldetag: 04.07.2001
(51) Int. Cl.: C07F 15/04, C07F 15/00, C08F 10/00, C08F 4/80

(54) **METALLVERBINDUNGEN UND IHRE VERWENDUNG ZUR POLYMERISATION VON OLEFINEN**
METALLIC COMPOUNDS AND THE USE THEREOF IN THE POLYMERISATION OF OLEFINS
COMPOSES METALLIQUES ET LEUR UTILISATION DANS LA POLYMERISATION D'OLEFINES

(30) Priorität: 06.07.2000 DE 10032403
(43) Veröffentlichungstag der Anmeldung: 02.04.2003
(73) Patentinhaber: BASF AKTIENGESELLSCHAFT, 67056 Ludwigshafen (DE)
(72) Erfinder: KRISTEN, Marc, Oliver, 67117 Limburgerhof (DE); HOFMANN, Peter, 69118 Heidelberg (DE); EISENTRÄGER, Frank, 68163 Mannheim (DE)
(86) Internationale Anmeldenummer: PCT/EP2001/007640
(87) Internationale Veröffentlichungsnummer: WO 2002/002573

(56) Entgegenhaltungen:
- WO-A-96/37522
- BONNET, MICHEL C. ET AL: "Synthesis of cationic and neutral methallyl nickel complexes and applications in ethene oligomerization" J. CHEM. SOC., CHEM. COMMUN., Nr. 5, 1994, Seiten 615-616, XP000915156
- ISSLEIB, K. N. ET AL: "Complex chemistry of phosphines and phosphine oxides. XXI. Complexing behavior of methylene(diphenyl)phosphine and lithium bis(diphenylphosphino)methanide" Z. ANORG. ALLG. CHEM., Bd. 388, Nr. 1, 1972, Seiten 89-96, XP001015843
- RIDGWELL, PHILIP J. ET AL: "Synthesis and characterization by spectroscopy and x-ray structure determination of palladium complexes containing the 1-3-.eta.-1,2-di-tert-butyl-3-methyl-4-met hylenecyclobutenyl ligand" J. CHEM. SOC., DALTON TRANS., Nr. 5, 1982, Seiten 999-1004, XP001015878
- FALLIS, STEPHEN ET AL: "Synthesis and reactions of cationic palladium and platinum cyclopentadienyl complexes. Molecular structure of (.eta.5-cyclopentadienyl)[1,2-bis(diphenyl phosphino)ethane]platinum( II) triflate" ORGANOMETALLICS, Bd. 12, Nr. 10, 1993, Seiten 3851-3855, XP001023112
- SANSHIRO KOMIYA: "Synthesis of organometallic compounds" 1997 , JOHN WILEY & SONS LTD , CHICHESTER XP002176947 * Kapitel 12.4.3 * Seite 279

## Beschreibung

Metallverbindung der allgemeinen Formel I, 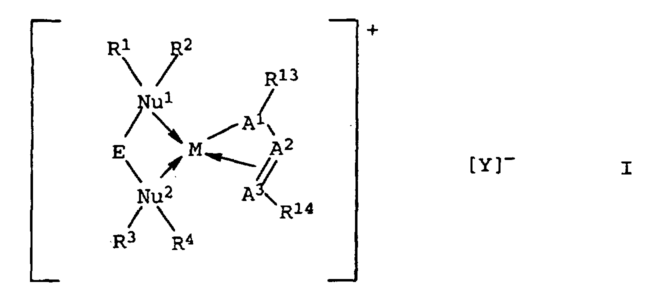 in der die Variablen wie folgt definiert sind:
- M: Ni in der Oxidationsstufe +II;
- Nu¹, Nu²: P,
- E: 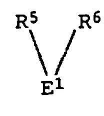
und dabei
- E¹: ausgewählt aus C, Si oder Ge;
- R¹ bis R⁶: unabhängig voneinander ausgewählt aus Wasserstoff,
C₁-C₈-Alkyl, substituiert oder unsubstituiert,
C₂-C₈-Alkenyl, substituiert oder unsubstituiert, mit ein bis 4 isolierten oder konjugierten Doppelbindungen;
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy, substituiert oder unsubstituiert,
C₆-C₁₄-Aryloxy,
SiR¹⁸R¹⁹R²⁰ oder O-SiR¹⁸R¹⁹R²⁰, wobei R¹⁸-R²⁰ ausgewählt werden aus Wasserstoff, C₁-C₈-Alkyl, C₃-C₁₂-Cycloalkyl, C₇-C₁₃-Aralkyl oder C₆-C₁₄-Aryl;
fünf- bis sechsgliedrigen stickstoffhaltigen Heteroarylresten, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹⁸R¹⁹R²⁰ oder O-SiR¹⁸R¹⁹R²⁰, wobei R¹⁸-R²⁰ ausgewählt werden aus Wasserstoff, C₁-C₈-Alkyl, C₃-C₁₂-Cycloalkyl, C₇-C₁₃-Aralkyl oder C₆-C₁₄-Aryl;
wobei räumlich benachbarte Reste R¹ bis R⁶ unter Einbeziehung von E miteinander zu einem gesättigten oder olefinisch ungesättigten 5- bis 12-gliedrigen Ring verbunden sein können;
- A¹, A³: ausgewählt aus C-R¹⁵, C-R¹⁶, Si-R¹⁵, Si-R¹⁶ oder N,
- A²: ausgewählt aus C-R¹⁷, Si-R¹⁷ oder N,
wobei höchstens ein A^{j} ein Stickstoffatom ist und j = 1, 2, 3;
- R¹³ bis R¹⁷: ausgewählt aus
Wasserstoff,
C₁-C₈-Alkyl, substituiert oder unsubstituiert,
C₂-C₈-Alkenyl, substituiert oder unsubstituiert, mit ein bis 4 isolierten oder konjugierten Doppelbindungen;
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹⁸R¹⁹R²⁰ oder O-SiR¹⁸R¹⁹R²⁰, wobei R¹⁸-R²⁰ ausgewählt werden aus Wasserstoff, C₁-C₈-Alkyl, C₃-C₁₂-Cycloalkyl, C₇-C₁₃-Aralkyl oder C₆-C₁₄-Aryl;
fünf- bis sechsgliedrigen Stickstoffhaltigen Heteroarylresten, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹⁸R¹⁹R²⁰ oder O-SiR¹⁸R¹⁹R²⁰, wobei R¹⁸-R²⁰ ausgewählt werden aus C₁-C₈-Alkyl, C₃-C₁₂-Cycloalkyl, C₇-C₁₃-Aralkyl oder C₆-C₁₄-Aryl;
wobei R¹³ bis R¹⁷ unter Einbeziehung eines oder mehrerer Atome A^{j} einen gesättigten oder ungesättigten 5- bis 12-gliedrigen Ring bilden können,
und [Y]⁻ ein Anion ist.

Die vorliegende Erfindung betrifft Metallverbindungen, die zur Polymerisation und Copolymerisation von Olefinen in der Lage sind. Weiterhin betrifft die vorliegende Erfindung ein Verfahren zur Polymerisation und Copolymerisation von Olefinen unter Verwendung einer oder mehrerer der erfindungsgemäßen Metallverbindungen. Weiterhin betrifft die vorliegende Erfindung Trägerkatalysatoren für die Polymerisation oder Copolymerisation, enthaltend eine oder mehrere der erfindungsgemäßen Metallverbindungen, ein Verfahren zur Herstellung der erfindungsgemäßen Trägerkatalysatoren sowie ein verfahren zur Polymerisation oder Copolymerisation von Olefinen unter Verwendung einer oder mehrerer der erfindungsgemäßen Metallverbindungen. Schließlich betrifft die vorliegende Erfindung ein Verfahren zur Herstellung der erfindungsgemäßen Metallverbindungen.

Polymere und Copolymere von Olefinen sind wirtschaftlich von großer Bedeutung, weil die Monomere in großen Mengen leicht zugänglich sind und weil sich die Polymere durch Variation des Herstellverfahrens oder der Verarbeitungsparameter in weiten Bereichen variieren lassen. Besondere Aufmerksamkeit beim Herstellverfahren gilt dabei dem verwendeten Katalysator. Neben Ziegler-Natta-Katalysatoren sind verschiedenartige Single-Site-Katalysatoren von wachsender Bedeutung, wobei als Zentralatome neben Zr wie beispielsweise in Metallocenkatalysatoren (H.-H. Brintzinger et al., Angew. Chem. 1995, *107*, 1255) auch Ni oder Pd (WO 96/23010) oder Fe und Co (z.B. WO 98/27124) in jüngster Zeit genauer untersucht worden sind. Die Komplexe von Ni, Pd, Fe und Co werden auch als Komplexe später Übergangsmetalle bezeichnet.

Metallocenkatalysatoren haben für den großtechnischen Einsatz Nachteile. Die Katalysatoren sind gegenüber Verunreinigungen in den großtechnisch erhältlichen Monomeren, im Prozessgas und den eingesetzten Lösemitteln sehr empfindlich. Als störende Verunreinigungen sind beispielsweise Feuchtigkeit und Sauerstoff sowie CO zu nennen, aber auch ganz allgemein Lewis-Basen wie Ether. Des weiteren ist der Preis für Zr als Zentralmetall der technisch wichtigen Zirkonocene sehr hoch.

Während Ni- oder Pd-Komplexe (WO 96/23010) die Bildung hochverzweigter, kommerziell weniger interessanter Polymere katalysieren, führt die Verwendung von Fe- oder Co-Komplexen zur Bildung von hochlinearem Polyethylen.

Die vorstehend genannten Komplexe sind als solche polymerisationsinaktiv und müssen durch sogenannte Cokatalysatoren aktiviert werden. Als Cokatalysatoren für die Ethylenpolymerisation werden Methylaluminoxan ("MAO") oder modifiziertes Methylaluminoxan ("MMAO") eingesetzt, bei dem ein gewisser Prozentsatz der Methylgruppen durch Isobutylgruppen ersetzt wurde.

Die Verwendung von MAO oder anderen Aluminoxanen hat jedoch Nachteile:
- MAO und andere Aluminoxane müssen in einem großen molaren Überschuss eingesetzt werden, üblich sind 100 bis 1000-fache Überschüsse. Dadurch wird der Cokatalysator zu einem signifikanten Kostenfaktor für die Katalysatoren.
- Aluminoxane sind molekular nicht definierte Substanzen, deren Fähigkeit zur Aktivierung von Übergangsmetallkomplexen stark von dem Herstellverfahren und Verunreinigungen abhängt. Weiterhin spielt die Lagertemperatur und die Lagerdauer eine Rolle. Die Qualitätskontrolle ist schwierig.
- Aluminoxane müssen stets gekühlt gelagert werden, weil sie ansonsten zum Vergelen neigen. Aluminoxan-Gele sind als Cokatalysatoren ungeeignet.
- Aluminoxane müssen im großen Überschuss eingesetzt werden und erhöhen den Restaschegehalt im Polymeren.
- Aluminoxane werden als Lösungen in den Handel gebracht, deshalb muss viel ansonsten wertloses Lösemittel transportiert werden.
- Aluminoxane, insbesondere solche mit C₁-C₄-Alkylresten, sowie ihre Lösungen sind pyrophor und erfordern erhöhten Sicherheitsaufwand.

Eine andere Klasse bekannter Cokatalysatoren sind starke Lewis-Säuren sowie Salze sterisch anspruchsvoll substituierter nicht oder nur schwach koordinierender Anionen. Geeignete Lewis-Säuren und Salze sind ausgewählte Bor-Verbindungen mit elektronenziehenden Resten (z.B. Trispentafluorphenylboran, *N*,*N*-Dimethylanilinium-tetrakis-pentafluorphenylborat, Tri-n-butylammonium-tetrakis-pentafluorphenylborat, N,N-Dimethylanilinium-tetrakis-(3,5-bisperfluormethyl)-phenylborat, Tri-n-butylammonium-tetrakis-(3,5-bisperfluormethyl)-phenylborat sowie Tritylium-tetrakispentafluorphenylborat, meist zusammen mit einem Aluminiumalkyl. Diese Aktivatoren sind in EP-A 0 468 537 und in EP-A 0 426 638 beschrieben. Nachteilig an diesen Katalysatorsystemen ist, dass sie aufgrund der Verwendung von Aluminiumalkylen luft- und feuchtigkeitsempfindlich sind. Auch andere Lewis-Basen wie beispielsweise Ether müssen sorgfältig ausgeschlossen werden, desgleichen CO und CO₂.

Bekannt sind weiterhin Palladiumkomplexe der allgemeinen Formel A oder B,

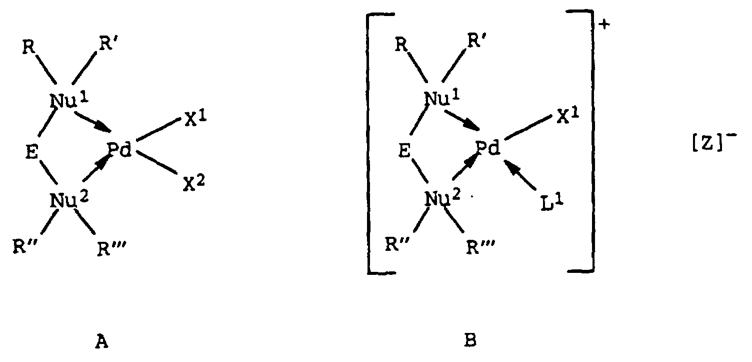

(EP-A 0 827 515) mit R, R', R" und R"' ausgewählt aus verschiedenen Alkyl- oder und Arylresten, einem Brückenelement E, Nu¹ und Nu² ausgewählt aus N, P oder As und einem Gegenion [Z]. Wählt man als weiteren Liganden am Pd die Gruppen X¹ und X² aus Halogen, Aryl, Aralkyl oder Alkyl, L¹ ist ein Neutralligand wie beispielsweise Acetonitril oder Diethylether, sind die Komplexe der allgemeinen Formel A und B geeignet, um Polyolefine und Olefincopolymere, insbesondere mit polaren Comonomeren, herzustellen. Jedoch haben die Komplexe der allgemeinen Formel A und B in ihrer Verwendung auch Nachteile:
- Wählt man X¹ und X² aus Alkyl, Aryl oder Aralkyl aus, so sind die Komplexe luft- und feuchtigkeitsempfindlich und weisen eine geringe Lagerstabilität auf.
- Wählt man X¹ und X² aus Halogenid aus, so ist die Aktivität der komplexe für technische Anwendungen häufig zu gering.

Wenn Lewis-Basen, Luft und Feuchtigkeit sorgfältig ausgeschlossen werden müssen, wie es die bekannten Katalysatorsysteme erfordern, müssen besondere Anforderungen an die Reinheit der verwendeten Monomeren und Suspensions- und Lösemittel bei der Polymerisation gestellt werden, was im Allgemeinen zu hohen Investitionen führt. Weiterhin sind die bekannten Katalysatoren nur begrenzt lagerstabil.

Es bestand also die Aufgabe, ein Katalysatorsystem zu finden, das ohne großen apparativen Aufwand für Luft- und Feuchtigkeitsausschluss sowie Monomerenreinigung gehandhabt werden kann und das keine Aktivatoren nötig hat. Weiterhin bestand die Aufgabe, mit diesem Katalysatorsystem Olefine zu polymerisieren und zu copolymerisieren.

Demgemäß wurden die eingangs definierten Metallverbindungen gefunden.

In Formel I sind
- M: Ni;
- Nu¹ und Nu²: gleich P.

Das verbrückende Element E ist

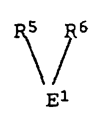

E¹ wird ausgewählt aus C, Si oder Ge, bevorzugt sind C und Si und besonders bevorzugt ist C.

R¹ bis R⁶ sind unabhängig voneinander ausgewählt aus
- Wasserstoff,
- C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₂-C₈-Alkenyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
- Unter den substituierten C₂-C₈-Alkenylgruppen seien beispielhaft genannt: Isopropenyl, 1-Isoprenyl, α-Styryl, β-Styryl, 1-cis-1,2-Phenylethenyl oder 1-trans-1,2-Phenylethenyl.
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt: 2-Methylcyclopentyl, 3-Methylcyclopentyl, cis-2,4-Dimethylcyclopentyl, trans-2,4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thio-methylcyclopentyl, 3-Thiomethylcyclohexyl und weitere Derivate;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, gleich oder verschieden substituiert durch eine oder mehrere
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl. Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, ortho-Kresyloxy, meta-Kresyloxy, para-Kresyloxy, α-Naphthoxy, β-Naphthoxy oder 9-Anthryloxy;
   - Silylgruppen SiR¹⁸R¹⁹R²⁰, wobei R¹⁸ bis R²⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR¹⁸R¹⁹R²⁰, wobei R¹⁸ bis R²⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxyund die Tri-*para*-xylylsilyloxygruppe; besonders bevorzugt sind die Trimethylsilyloxygruppe und die tert.-Butyldimethylsilyloxygruppe;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl, gleich oder verschieden einfach oder mehrfach substituiert mit
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, *ortho*-Kresyloxy, *meta*-Kresyloxy, *para*-Kresyloxy, α-Naphthoxy, β-Naphthoxy oder 9-Anthryloxy;
   - Silylgruppen SiR¹⁸R¹⁹R²⁰, wobei R¹⁸ bis R²⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR¹⁸R¹⁹R²⁰, wobei R¹⁸ bis R²⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxyund die Tri-para-xylylsilyloxygruppe; besonders bevorzugt sind die Trimethylsilyloxygruppe und die tert.-Butyldimethylsilyloxygruppe;

In einer bevorzugten Ausführungsform sind R¹ und R² sowie R³ und R⁴ paarweise gleich und ausgewählt aus tert.-Butyl und Cyclohexylresten. In einer besonders bevorzugten Ausführungsform sind R⁵ und R⁶ gleich, ganz besonders bevorzugt sind sie Wasserstoff.

In einer besonderen Ausführungsform können R¹ und ein geeignetes R² bis R⁶ miteinander unter Einbeziehung von E¹ einen gesättigten oder ungesättigten 5- bis 12-gliedrigen Ring bilden. In einer weiteren besonderen Ausführungsform können R³ und ein geeignetes R⁵ bis R⁶ miteinander unter Einbeziehung von E¹ einen gesättigten oder ungesättigten 5- bis 12-gliedrigen Ring bilden. Beispielsweise können R¹ und R⁵ zusammen sein:
-(CH₂)₃- (Trimethylen), -(CH₂)₄- (Tetramethylen), -(CH₂)₅- (Pentamethylen), -(CH₂)₆- (Hexamethylen), -CH₂-CH=CH-, -CH₂-CH=CH-CH₂-, -CH=CH-CH=CH-, -O-CH₂-O-, -O-CHMe-O-, -O-CH-(C₆H₅)-O-, -O-CH₂-CH₂-O-, -O-CMe₂-O-, -NMe-CH₂-CH₂-NMe-, -NMe-CH₂-NMe- oder -O-SiMe₂-O- mit Me = CH₃.

A¹ und A³ werden ausgewählt aus C-R¹⁵, C-R¹⁶, Si-R¹⁵, Si-R¹⁶ oder N, wobei A¹ und A³ gleich sein können, aber nicht gleich sein müssen.

A² wird ausgewählt aus C-R¹⁷, Si-R¹⁷ oder N. Dabei ist höchstens ein A^{j} mit j = 1, 2, 3 ein Stickstoffatom.

R¹³ bis R¹⁷ sind gleich oder verschieden und ausgewählt aus
- Wasserstoff,
- C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 2,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₂-C₈-Alkenyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
- Unter den substituierten C₂-C₈-Alkenylgruppen seien beispielhaft genannt: Isopropenyl, 1-Isoprenyl, α-Styryl, β-Styryl, 1-cis-1,2-Phenylethenyl oder 1-trans-1,2-Phenylethenyl.
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt: 2-Methylcyclopentyl, 3-Methylcyclopentyl, cis-2,4-Dimethylcyclopentyl, trans-2,4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thio-methylcyclopentyl, 3-Thiomethylcyclohexyl und weitere Derivate;
- NO₂,
- Halogen, ausgewählt aus Fluor, Chlor, Brom und Iod, bevorzugt Fluor oder Chlor,
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, gleich oder verschieden substituiert durch eine oder mehrere
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, ortho-Kresyloxy, meta-Kresyloxy, para-Kresyloxy, α-Naphthoxy, β-Naphthoxy oder 9-Anthryloxy;
   - Silylgruppen SiR¹⁸R¹⁹R²⁰, wobei R¹⁸ bis R²⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR¹⁸R¹⁹R²⁰; wobei R¹⁸ bis R²⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxyund die Tri-*para*-xylylsilyloxygruppe; besonders bevorzugt sind die Trimethylsilyloxygruppe und die tert.-Butyldimethylsilyloxygruppe;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl, gleich oder verschieden einfach oder mehrfach substituiert mit
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 2-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, *ortho*-Kresyloxy, *meta*-Kresyloxy, *para*-Kresyloxy, α-Naphthoxy, β-Naphthoxy oder 9-Anthryloxy;
   - Silylgruppen SiR¹⁸R¹⁹R²⁰, wobei R¹⁸ bis R²⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyi-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR¹⁸R¹⁹R²⁰, wobei R¹⁸ bis R²⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxyund die Tri-para-xylylsilyloxygruppe; besonders bevorzugt sind die Trimethylsilyloxygruppe und die tert.-Butyldimethylsilyloxygruppe;

Dabei können zwei Reste R¹³ bis R¹⁷ mit oder ohne Einbeziehung einer oder mehrerer Gruppen A^{j} einen gesättigten oder ungesättigten 5- bis 12-gliedrigen Ring bilden, der seinerseits mit Resten substituiert sein kann. So können beispielsweise R¹⁵ und R¹⁷ zusammen sein:
-(CH₂)₃- (Trimethylen), -(CH₂)₄- (Tetramethylen), -(CH₂)₅- (Pentamethylen), -(CH₂)₆- (Hexamethylen), -CH₂-CH=CH-, -CH₂-CH=CH-CH₂-, -CH=CH-CH=CH-, -O-CH₂-O-, -O-CHMe-O-, -O-CH-(C₆H₅)-O-, -O-CH₂-CH₂-O-, -O-CMe₂-O-, -NMe-CH₂-CH₂-NMe-, -NMe-CH₂-NMe- oder -O-SiMe₂-O- mit Me = CH₃.

In einer ganz besonders bevorzugten Ausführungsform sind A¹ und A³ gleich C-R¹⁵, R¹³ und R¹⁵ sind Wasserstoff, A² ist C-R¹⁷, und R¹⁴ und R¹⁷ bilden zusammen eine 1,3-Butadien-1,4-diyl-Einheit, die ihrerseits mit Resten Z¹ bis Z⁵ substituiert sein kann (Formel IV). In Formel IV 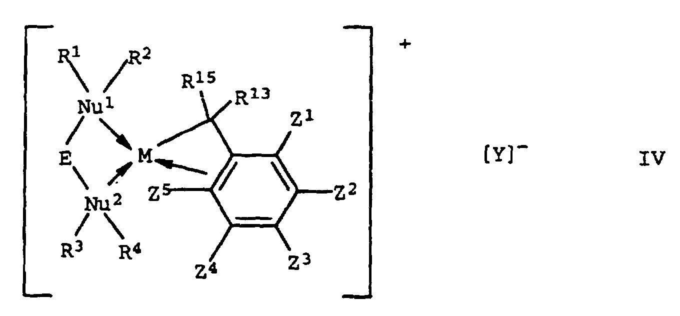 sind Z¹ bis Z⁵ gleich oder verschieden und ausgewählt aus
- Wasserstoff,
- C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perflüorbutyl, besonders bevorzugt sind Fluormethyl, Difluormethyl, Trifluormethyl und Perfluorbutyl;
- C₂-C₈-Alkenyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
- Unter den substituierten C₂-C₈-Alkenylgruppen seien beispielhaft genannt: Isopropenyl, 1-Isoprenyl, α-Styryl, β-Styryl, 1-cis-1,2-Phenylethenyl oder 1-trans-1,2-Phenylethenyl.
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt: 2-Methylcyclopentyl, 3-Methylcyclopentyl, cis-2,4-Dimethylcyclopentyl, trans-2,4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thio-methylcyclopentyl, 3-Thiomethylcyclohexyl und weitere Derivate;
- NO₂,
- Halogen, ausgewählt aus Fluor, Chlor, Brom und Iod, bevorzugt Fluor oder Chlor,
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;

Dabei können zwei benachbarte Reste Z¹ bis Z⁵ unter Einbeziehung des Phenylsystems einen 5- bis 12-gliedrigen Ring bilden. So können beispielsweise Z¹ und Z² oder Z² und Z³ zusammen sein:
-(CH₂)₃- (Trimethylen), -(CH₂)₄- (Tetramethylen), -(CH₂)₅- (Pentamethylen), -(CH₂)₆- (Hexamethylen), -CH₂-CH=CH-, -CH₂-CH=CH-CH₂-, -CH=CH-CH=CH-, -O-CH₂-O-, -O-CHMe-O-, -O-CH-(C₆H₅)-O-, -O-CH₂-CH₂-O-, -O-CMe₂-O-, -NMe-CH₂-CH₂-NMe-, -NMe-CH₂-NMe- oder -O-SiMe₂-O- mit Me = CH₃.

Als Anionen [Y]⁻ haben sich schwach koordinierende Anionen bewährt, die in der Komplexchemie von Nickel und Palladium verwendet werden.

Eine bevorzugte Klasse von Anionen sind solche der allgemeinen Formel [BAr₄]⁻.

Unter Ar werden aromatische C₆-C₁₄-Reste verstanden, die gleich oder verschieden sein können und ein- oder mehrfach substituiert sind mit
- Halogen, beispielsweise Fluor, Chlor oder Brom oder Iod, bevorzugt Fluor oder Chlor und besonders bevorzugt Fluor;
- C₁-C₈-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl; weiterhin -CH₂CN.
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- unter den substituierten C₆-C₁₄-Aryl-Gruppen seien beispielhaft genannt: Pentafluorphenyl, 2,4,6-Trichlorphenyl und 3,5-Dicyanophenyl;

Besonders bevorzugte Anionen [Y⁻] sind beispielsweise Tetraphenylborat, Tetrakisperfluorphenylborat [B(C₆F₅)₄]⁻ oder Tetrakis(3,5-bistrifluormethylphenyl)-borat [B(C₆H₃{CF₃}₂)₄]⁻.

Ganz besonders geeignet sind weiterhin die Anionen BF₄⁻, PF₆⁻, AsF₆⁻, SbF₆⁻, ClO₄⁻, CF₃SO₃⁻ oder CF₃CO₂⁻.

Ein besonderer Vorteil dieser besonders geeigneten Anionen ist, dass sie in Form ihrer Säuren eingesetzt werden können, während zahlreiche Borate nur als teure *N*,*N*-Dimethylanilinium-Salze kommerziell erhältlich sind.

Die Herstellung der erfindungsgemäßen Metallverbindungen erfolgt vorteilhaft so, dass man eine Metallkomplexverbindung der allgemeinen Formel II 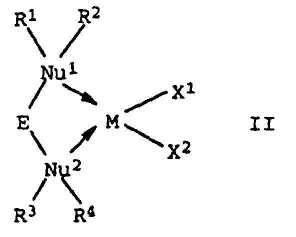 mit zwei Äquivalenten einer Verbindung der allgemeinen Formel III a oder mindestens einem Äquivalent einer Verbindung der allgemeinen Formel III b 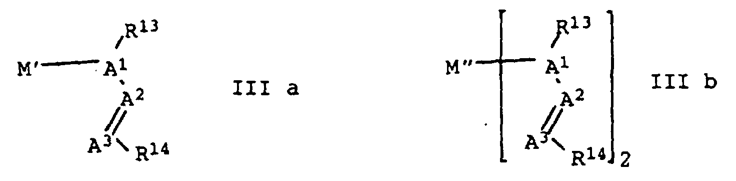 umsetzt und anschließend durch Zugabe eines Äquivalents einer Säure ein Äquivalent des Anions der Verbindung III abspaltet.

In Formel II sind X¹ und X² gleich oder verschieden und ausgewählt aus den Halogenen wie beispielsweise Fluor, Chlor, Brom oder Iod, wobei Chlor und Brom bevorzugt sind.

In Verbindungen der allgemeinen Formel III a wird M' ausgewählt aus Li, Na, K, Rb, Cs oder MgX³, wobei X³ ausgewählt ist aus Chlor, Brom und Iod. In bevorzugten Ausführungsformen bedeutet M' Li oder MgBr oder MgCl.

In den Verbindungen der allgemeinen Formel III b wird M'' ausgewählt aus Mg oder Ca, wobei Mg bevorzugt ist.

Die Herstellung der Metallkomplexverbindungen der allgemeinen Formel II ist in EP 0 827 515 beschrieben. Zahlreiche Verbindungen der allgemeinen Formel III a oder III b sind kommerziell erhältlich oder nach Standardvorschriften herstellbar, die beispielsweise in Houben-Weyl, Methoden der organischen Chemie, Thieme Verlag Stuttgart, Band 13/1 und 13/2a, 1970 aufgeführt sind.

Die Umsetzung der Metallkomplexverbindungen der allgemeinen Formel II mit der Verbindung der allgemeinen Formel III a oder III b ist an sich unkritisch, und die Reaktionsbedingungen können in weiten Grenzen gewählt werden. Die Reihenfolge der Zugabe der Reagenzien ist unkritisch. Als Reaktionstemperaturen sind -78°C bis + 125°C geeignet, bevorzugt sind -40°C bis Raumtemperatur. Die Umsetzung kann unter Atmosphärendruck, aber auch bei leicht gesenktem oder erhöhtem Druck erfolgen, wobei Drücke von 10 mbar bis 10 bar geeignet sind. Bevorzugt wird die Reaktion bei Atmosphärendruck durchgeführt.

Die Verbindungen der allgemeinen Formeln III a und III b sind im Allgemeinen luft- und feuchtigkeitsempfindlich, deshalb ist es sinnvoll, unter Luft- und Feuchtigkeitsausschluss zu arbeiten.

Es hat sich bewährt, die Reaktion in einem Verdünnungsmittel durchzuführen. Als Verdünnungsmittel können gewählt werden:
- Paraffine wie beispielsweise n-Pentan, n-Hexan, n-Heptan, Isooctan, Cyclohexan oder auch Isododekan,
- Aromaten wie Benzol, Toluol, Ethylbenzol, *o*-Xylol, *m*-Xyxlol, *p*-Xylol oder Mischungen verschiedener Aromaten;
- nicht-cyclische oder cyclische Ether wie beispielsweise Diethylether, Diisopropylether, Di-n-butylether, Methyl-tert.-butylether, 1,2-Dimethoxethan, Diglykoldimethylether, Tetrahydrofuran, 1,4-Dioxan;
- Sulfolan oder HMPT (Hexamethylphosphorsäuretriamid),
sowie Gemische der oben stehenden Verdünnungsmittel. Bevorzugte Verdünnungsmittel sind n-Pentan, n-Hexan oder Diethylether.

Dabei kann das Verdünnungsmittel als Löse- und Suspensionsmittel wirken.

Das Zwischenprodukt, dem man die Formel V zuordnen kann, 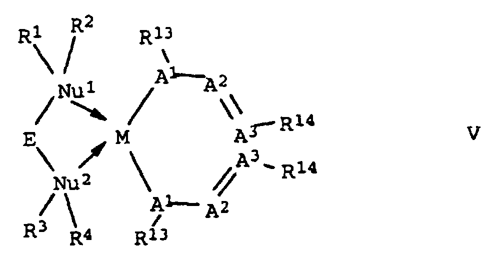 kann isoliert und aufgereinigt werden, wozu sich die aus der Komplexchemie gekannten Operationen wie beispielsweise Extrahieren, Eindampfen, Aus- und Umfällen, Kristallisieren oder Chromatographieren eignen. Dieser Schritt kann sinnvoll sein, um beispielsweise Spuren von Ausgangsmaterial II oder auch Metallsalze der Formel M'X¹, M'X², M"(X¹)₂ oder M''X¹X² abzutrennen, wie sie je nach Verwendung von III a oder III b anfallen.

Man kann auf den Reinigungsschritt jedoch auch verzichten und IV *in situ* weiterverarbeiten.

Dazu setzt man erfindungsgemäß die Zwischenstufe IV mit einem Derivat des Anions [Y]⁻ um. Als Derivat sind die konjugierten Brønsted-Säuren HY geeignet, weiterhin Ammoniumsalze wie beispielsweise [HₓNR*₄₋ₓ], wobei x eine ganze Zahl von 1 bis 4 ist und die Reste R* gleich oder verschieden und ausgewählt aus C₁-C₈-Alkyl oder C₆-C₁₄-Aryl sind und wobei C₁-C₈-Alkyl und C₆-C₁₄-Aryl wie für R¹ definiert sind. Weitere geeignete Derivate sind die Salze von Y⁻ mit Oxoniumionen. Ein besonders bevorzugtes Oxoniumion ist [H(OEt₂)₂]⁺ mit Et = C₂H₅.

Bevorzugt ist die Umsetzung der Zwischenstufe IV mit einer Brønsted-Säure von [Y]⁻. Diese Säuren der besonders geeigneten Ionen BF₄⁻, PF₆⁻, AsF₆⁻, SbF₆⁻, ClO₄⁻, CF₃SO₃⁻ oder CF₃CO₂⁻ sind preisgünstig zu erwerben.

Die Reaktionsbedingungen sind im Allgemeinen unkritisch. Die Reihenfolge der Zugabe der Reaktionspartner spielt weder für die Reinheit noch für die Ausbeute eine signifikante Rolle. Als Reaktionstemperaturen sind -95°C bis + 125°C geeignet, bevorzugt sind -40°C bis Raumtemperatur. Die Umsetzung kann unter Atmosphärendruck, aber auch bei leicht gesenktem oder erhöhtem Druck erfolgen, wobei Drücke von 10 mbar bis 10 bar geeignet sind. Bevorzugt wird die Reaktion bei Atmosphärendruck durchgeführt.

Die erfindungsgemäßen, in der Regel ionischen Metallverbindungen der allgemeinen Formel I lassen sich aus der Reaktionsmischungen durch dem Fachmann geläufige Operationen wie beispielsweise Extrahieren, Eindampfen, Aus- und Umfällen oder Kristallisieren isolieren und wenn nötig weiter reinigen. Im Allgemeinen fallen sie in guter Reinheit an und können sofort zur Polymerisation eingesetzt werden. Wegen ihrer Unempfindlichkeit gegen Luft und Feuchtigkeit können sie aber auch ohne spezielle Vorsichtsmaßnahmen über Wochen gelagert werden und sind auch danach ohne Aktivitätsverlust einsetzbar.

Die erfindungsgemäßen Komplexe können ohne weitere Aktivatoren unmittelbar zur Polymerisation oder Copolymerisation von Olefinen eingesetzt werden. Dabei ist es möglich, eine oder mehrere verschiedene der erfindungsgemäßen Metallverbindungen gleichzeitig einzusetzen.

Druck- und Temperaturbedingungen während der Polymerisation können in weiten Grenzen gewählt werden. Als Druck hat sich ein Bereich von 0,5 bar bis 4000 bar als geeignet erwiesen, bevorzugt sind 10 bis 75 bar oder Hochdruckbedingungen von 500 bis 2500 bar. Als Temperatur hat sich ein Bereich von 0 bis 120°C als geeignet erwiesen, bevorzugt sind 40 bis 100°C und besonders bevorzugt 50 bis 85°C.

Als Monomer sind die folgenden Olefine zu nennen: Ethylen, Propylen, 1-Buten, 1-Penten, 1-Hexen, 1-Octen, 1-Decen oder 1-Undecen, wobei Ethylen besonders bevorzugt ist.

Als Comonomere sind α-Olefine geeignet, wie beispielsweise 0,1 bis 20 mol-% 1-Buten, 1-Penten, 1-Hexen, 4-Methyl-1-Penten, 1-Octen, 1-Decen oder 1-Undecen. Aber auch Isobuten und Styrol sind geeignete Comonomere, des weiteren interne Olefine wie beispielsweise Cyclopenten, Cyclohexen, Norbornen und Norbornadien.

Als Lösemittel haben sich Toluol, ortho-Xylol, meta-Xylol, para-Xylol oder Ethylbenzol als geeignet erwiesen sowie Mischungen derselben, weiterhin Diethylether, Tetrahydrofuran, Chlorbenzol, 1,3-Dichlorbenzol, Dichlormethan und - bei Hochdruckbedingungen - überkritisches Ethylen.

Die erfindungsgemäßen Metallverbindungen lassen sich bei der Polymerisation mit Wasserstoff regeln, d.h. durch Zugabe von Wasserstoff lässt sich das Molekulargewicht der durch das erfindungsgemäße Katalysatorsystem erhältlichen Polymere senken. Bei genügend Wasserstoffzugabe werden Wachse erhalten, wobei die erforderliche Wasserstoffkonzentration auch von der Art der verwendeten Polymerisationsanlage abhängt.

Damit die erfindungsgemäßen Metallverbindungen in modernen Polymerisationsverfahren wie Suspensionsverfahren, Massepolymerisationsverfahren oder Gasphasenverfahren eingesetzt werden können, ist es notwendig, sie auf einem festen Träger zu immobilisieren. Andernfalls kann es zu Morphologieproblemen des Polymers (Brokken, Wandbeläge, Verstopfungen in Leitungen oder Wärmetauschern) kommen, die zum Abschalten der Anlage zwingen. Eine solche immobilisierte Metallverbindung wird als Katalysator bezeichnet.

Es wurde gefunden, dass sich die erfindungsgemäßen Metallverbindungen gut auf einem festen Träger abscheiden lassen. Als Trägermaterialien kommen z.B. poröse Metalloxide von Metallen der Gruppen 2 bis 14 oder Mischungen derselben in Frage, weiterhin Schichtsilikate und Zeolithe. Bevorzugte Beispiele für Metalloxide der Gruppen 2 bis 14 sind SiO₂, B₂O₃, Al₂O₃, MgO, CaO und ZnO. Bevorzugte Schichtsilikate sind Montmorrilonite oder Bentonite; als bevorzugter Zeolith wird MCM-41 eingesetzt.

Besonders bevorzugte Trägermaterialien sind sphärische Kieselgele und Alumosilikatgele der allgemeinen Formel SiO₂·a Al₂O₃, wobei a allgemein für eine Zahl im Bereich von 0 bis 2 steht, bevorzugt 0 bis 0,5. Derartige Kieselgele sind im Handel erhältlich, z.B. Silica Gel SG 332, Sylopol® 948 oder 952 oder S 2101 der Fa. W.R. Grace oder ES 70X der Fa. Crosfield.

Als Partikelgröße des Trägermaterials haben sich mittlere Teilchendurchmesser von 1 bis 300 µm bewährt, bevorzugt von 20 bis 80 µm, wobei der Teilchendurchmesser durch bekannte Methoden wie Siebmethoden bestimmt wird. Das Porenvolumen dieser Träger beträgt 1,0 bis 3,0 ml/g, bevorzugt von 1,6 bis 2,2 ml/g und besonders bevorzugt von 1,7 bis 1,9 ml/g. Die BET-Oberfläche beträgt 200 bis 750 m²/g, bevorzugt 250 bis 400 m²/g.

Um dem Trägermaterial anhaftende Verunreinigungen, insbesondere Feuchtigkeit, zu entfernen, können die Trägermaterialien vor der Dotierung ausgeheizt werden, wobei sich Temperaturen von 45 bis 1000°C eignen. Temperaturen von 100 bis 750°C sind für Kieselgele und andere Metalloxide besonders geeignet. Dieses Ausheizen kann über einen Zeitraum von 0,5 bis 24 Stunden erfolgen, wobei Ausheizzeiten von 1 bis 12 Stunden bevorzugt sind. Die Druckbedingungen sind vom gewählten Verfahren abhängig; das Ausheizen kann in einem Festbettverfahren, einem gerührten Kessel oder aber in einem Fließbettverfahren erfolgen. Ganz allgemein kann das Ausheizen bei Atmosphärendruck erfolgen. Vorteilhaft sind jedoch verminderte Drücke von 0,1 bis 500 mbar, besonders vorteilhaft ist ein Bereich von 1 bis 100 mbar und ganz besonders vorteilhaft ein Bereich von 2 bis 20 mbar. Für Fließbettverfahren hingegen empfiehlt es sich, bei leicht erhöhtem Druck zu arbeiten, wobei der Druck in einem Bereich von 1,01 bar bis 5 bar, bevorzugt 1,1 bis 1,5 bar gewählt wird.

Eine chemische Vorbehandlung des Trägermaterials mit einer Alkylverbindung wie Aluminiumalkyl, Lithiumalkyl oder einem Alumoxan ist ebenfalls möglich.

Aufgrund der geringen Empfindlichkeit der erfindungsgemäßen Metallverbindungen gegenüber Lewis-Basen kann jedoch auf das Ausheizen und chemische Vorbehandlungen des Trägermaterials verzichtet werden.

Für eine Polymerisation im Suspensionsverfahren werden solche Suspensionsmittel verwendet, in denen das gewünschte Polymer nicht oder nur in geringem Ausmaß löslich ist, weil andernfalls in den Anlagenteilen, in denen das Produkt vom Suspensionsmittel abgetrennt wird, Beläge des Produkts auftreten und zu wiederholten Abschaltungen und Reinigungsoperationen zwingen. Geeignete Suspensionsmittel sind gesättigte Kohlenwasserstoffe wie beispielsweise Propan, n-Butan, Isobutan, n-Pentan, Isopentan, n-Hexan, Isohexan und Cyclohexan, wobei Isobutan bevorzugt ist.

Druck- und Temperaturbedingungen während der Polymerisation können in weiten Grenzen gewählt werden. Als Druck hat sich ein Bereich von 0,5 bar bis 150 bar als geeignet erwiesen, bevorzugt sind 10 bis 75 bar. Als Temperatur hat sich ein Bereich von 0 bis 120°C als geeignet erwiesen, bevorzugt sind 40 bis 100°C.

Als Monomer sind die folgenden Olefine zu nennen: Ethylen, Propylen, 1-Buten, 1-Penten, 1-Hexen, 1-Octen, 1-Decen oder 1-Undecen.

Als Comonomere sind α-Olefine geeignet, wie beispielsweise 0,1 bis 20 mol-% 1-Buten, 1-Penten, 1-Hexen, 4-Methyl-1-Penten, 1-Octen, 1-Decen oder 1-Undecen. Aber auch Isobuten und Styrol sind geeignete Comonomere, des weiteren interne Olefine wie beispielsweise Cyclopenten, Cyclohexen, Norbornen und Norbornadien.

Die erfindungsgemäßen Katalysatoren haben sich weiterhin als Wasserstoff-regelbar erwiesen, d.h. durch Zugabe von Wasserstoff lässt sich das Molekulargewicht der durch die erfindungsgemäßen Katalysatoren erhältlichen Polymere senken. Bei genügend Wasserstoffzugabe werden Wachse erhalten, wobei die erforderliche Wasserstoffkonzentration auch von der Art der verwendeten Polymerisationsanlage abhängt. Bei Wasserstoffzugabe steigt die Aktivität der erfindungsgemäßen Katalysatoren.

Die erfindungsgemäßen Katalysatoren können auch gemeinsam mit einem oder mehreren anderen, an sich bekannten Polymerisationskatalysatoren verwendet werden. So können sie zusammen mit
- Ziegler-Natta-Katalysatoren,
- geträgerten Metallocenkatalysatoren der Übergangsmetalle der Gruppen IV bis VI des Periodensystems der Elemente,
- Katalysatoren der späten Übergangsmetalle (WO 96/23010),
- Fe- oder Co-Komplexen mit Pyridyldiiminliganden, wie sie in WO 98/27124 offenbart werden,
- oder auch Chromoxidkatalysatoren nach Phillips eingesetzt werden.

Dabei ist es einerseits möglich, verschiedene Katalysatoren miteinander zu mischen und gemeinsam zu dosieren oder cogeträgerte Komplexe auf einem gemeinsamen Träger zu verwenden oder auch verschiedene Katalysatoren getrennt an derselben oder an verschiedenen Stellen in das Polymerisationsgefäß zu dosieren.

Die Erfindung soll anhand von Arbeitsbeispielen erläutert werden.

Allgemeine Vorbemerkungen: Die Synthesen und Reinigungsoperationen wurden, wenn nicht anders vermerkt, unter striktem Luft- und Feuchtigkeitsausschluss durchgeführt. Alle Lösemittel wurden unmittelbar vor dem Einsatz nach Standardverfahren getrocknet (beispielsweise in Organikum, 3. Nachdruck der 15. Auflage, VEB Deutscher Verlag der Wissenschaften, Leipzig 1984). Die Schmelzpunkte sind nicht korrigiert. Die ¹H-NMR-Spektren wurden mit Tetramethylsilan als innerem Standard gemessen.

Die nachstehend aufgeführten Ausgangsmaterialien und Reagenzien wurden nach Literaturmethoden hergestellt bzw. kommerziell erworben:
(η²-*trans*-Stilben)[{bis(di-*t*-butylphosphino)]methan-κ²*P*}nickel(0)] nach EP-A 0 827 515 oder analog zu P. Hofmann et al., Z. Naturforsch. 1990, 45b, 897 sowie DE-A 40 34 604;
Bis(dicyclohexylphosphino)methan: F. I. Joslin et al., Polyhedron 1991, 10, 1713 und J. S. Yu, I. P. Rothwell, J. Chem. Soc., Chem. Commun., 1992, 632.

Es werden folgende Abkürzungen verwendet: Me = CH₃; Et = C₂H₅, Ph = C₆H₅; PE=Polyethylen.

1M PhCH₂MgCl (Benzylmagnesiumchlorid) in Diethylether wurde bei Aldrich käuflich erworben;
[H(OEt₂)₂] [B(C₆H₃{CF₃}₂)₄] wurde synthetisiert nach Literaturvorschrift von M. Brookhart et al., Organometallics 1992, 11, 3920.

### 1. Synthesebeispiele

### Synthesebeispiel 1.1

### Synthese von [η³-(1-Benzyl)benzyl] [bis(di-t-butylphosphino)methan-κ²P]nickel(II)-tetrakis[3,5-bis(trifluormethyl)phenyl]borat, [(dtbpm-κ²P,P')Ni(η³-CH(CH₂Ph)Ph]⁺ [B(C₆H₃{CF₃}₂)₄]⁻ (Formel 1)

In einem Schlenk-Rohr wurden 200 mg (0.37 mmol) (η²-*trans*-Stilben) [{bis(di-*t*-butylphosphino)]methan-κ²*P*}nickel(0)], und 372,5 mg (0,37 mmol) der Säure [H(OEt₂)₂] [B(C₆H₃{CF₃}₂)₄] bei 0°C in 20 ml Diethylether gelöst und 25 min gerührt. Die Lösung wurde mit 20 ml Pentan versetzt, wobei ein hellbrauner Niederschlag ausfiel. Die überstehende Lösung wurde abdekantiert und der Feststoff mit 5 ml Pentan nachgewaschen und am Hochvakuum getrocknet.

Ausbeute: 476 mg (0,34 mmol, 91% d. Th.)

| | | | | |
|---|---|---|---|---|
| Elementaranalyse für C₄₃H₆₃P₂NiBF₂₄ | ber. | C: 53,76 | H: 4,51 | P: 4,40 |
| | gef. | C: 53,67 | H: 4,60 | P: 4,31 |

Schmelzpunkt: 158°C (Zersetzung)

¹H-NMR (500 MHz, D₆-Aceton, T = 298 K): δ = 1,26 (d, ³*J*_{PH} = 13,8 Hz, 9 H, C(CH₃)₃), 1,43 (d, ³*J*_{PH} = 13,8 Hz, 9 H, C(CH₃)₃),1,61 (d, ³*J*_{PH} = 14,2 Hz, 9 H, C(CH₃)₃), 1,63 (d, ³*J*_{PH} = 14,2 Hz, 9 H, C(CH₃)₃), 3,13 (m, 2H, CH₂Ph), 3,27 (m, 2H, PCH₂P), 3,83 (m, 1H, NiCHCH₂), 6,86 (d, 1H, Ar₁-*o*-H), 7,13 (m, N = 44,9 Hz, 6 H, ph-H u. Ar₁-*o*-H), 7,52 (t, ³J_{HH} = 7,5 Hz, 1 H, Ar₁-*m*-H), 7,52 (s, *p*-H, 4H, [B(C₆H₃{CF₃}₂)₄], 7,58 (t, ³J_{HH} = 7,5 Hz, 1 H, Ar₁-*m*-H), 7,74 (m, 1 H, Ar₁-*p*-H), 7,79 (s, 8 H, *o*-H [B(C₆H₃{CF₃}₂)₄])
³¹P-NMR (122 MHz, D₈-THF): δ = 16,8 [d (2*J* = 20,86 Hz)], 29,6 [d (2*J* = 20,86 Hz)]
IR (KBr): ν [cm⁻¹] = 2966 (w), 1611(w), 1473(w), 1355(m), 1279(s), 1163 (m), 1128 (s), 885 (w), 839 (w), 744 (w), 716 (w), 682 (w), 669 (w)
MS (LT-FAB): m/z = 543,4 [K]⁺ mit korrektem Isotopenmuster

### Synthesebeispiel 1.2

### Synthese von (η³-Benzyl)[bis(di-t-butylphosphino)methan-κ²P]nikkel(II)-tetrakis[3,5-bis(trifluormethyl)phenyl]borat, [(dtbpm-κ²P)Ni(η³-CH₂Ph]⁺[B(C₆H₃{CF₃}₂)₄]⁻ (Formel 2)

60 mg (138,6 µmol) (dtbpm-κ²*P*)NiCl₂ wurden in 15 ml Pentan suspendiert und auf -40°C abgekühlt. Es wurden 0,28 ml (280 µmol) PhCH₂MgCl (1M in Diethylether) zugegeben und 4 Stunden bei -40°C gerührt. Die Pentanlösung färbt sich schwach rot. Die Lösung wurde abgehebert und der Feststoff zweimal mit Pentan gewaschen. Anschließend wurde das Produkt aus dem Rückstand durch mehrfache Extraktion bei -50°C mit Diethylether gewonnen. Die über Celite® filtrierte etherische Lösung wurde direkt auf 100 mg (99 µmol) [H(OEt₂)₂] [B(C₆H₃{CF₃}₂)₄] getropft. Es entstand eine orangefarbene Lösung, die sich im Zuge des Zutropfens langsam dunkler färbte. Der Niederschlag wurde in der Kälte mehrfach mit je 3 ml Diethylether extrahiert, und die vereinigten orangefarbenen Extrakte wurden von ausgefallenem Niederschlag abgehebert und unter vermindertem Druck eingeengt. Das Produkt wurde durch Zugabe von Pentan ausgefällt. Durch zweimaliges Aufnehmen mit Ether und Ausfällen mit Pentan wurde das Produkt gereinigt.

Ausbeute: 46 mg (25%)

| | | | | |
|---|---|---|---|---|
| Elementaranalyse für C₅₆H₅₇F₂₄P₂NiB | ber. | C: 51,05 | H: 4,36 | P: 4,70 |
| | gef. | C: 50,98 | H: 4,19 | P: 4,73 |

Schmelzpunkt: 195 °C

¹H-NMR (300 MHz, D₆-Aceton, T = 298 K) : δ = 1,33 (d, ³*J*_{PH} = 13, 9 Hz, 18H, C(CH₃)₃), 1,58 (d, ³*J*_{PH} = 14,5 Hz, 18H, C(CH₃)₃), 2,60 (dd, ²*J*_{PH} = 6,0 Hz, 2*J*_{PH} = 3,2 Hz, 2H, P-CH₂-P), 3,39 (dd, ³*J*_{PH} = 9,21 Hz, ³*J*_{PH} = 1,5 Hz, 2H, CH₂-Ph), 6,77 (d, ³*J*_{HH} = 6,8 Hz, 2H, *o*-Benzyl-H), 7,52 (t, ³*J*_{HH} = 7,35, 1H, *p*-Benzyl-H), 7,66 (s, 4H, *p*-H des [B(C₆H₃{CF₃}₂)₄]), 7,77 (m, 10H, *o*-H des [B(C₆H₃{CF₃}₂)₄] + *m*-Benzyl-H)
³¹P-NMR (122 MHz, C₆D₆, T = 298 K): δ = 20,0 (d, 2*J*_{PP} = 13, 0 Hz), 36,0 (d, 2*J*pp = 13,0 Hz)
¹³C-NMR (126 MHz, D₆-Aceton, T = 298 K) : δ = 26,61 (t, ¹*J*_{PC} = 13,7 Hz, P-CH₂-P), 31,11 (d, ²*J*_{PC} = 2,4 Hz, C(CH₃)₃), 31,19 (d, ²*J*_{PC} = 7,6 Hz, C(CH₃)₃), 37,02 (d, ¹*J*_{PC} = 5,2 Hz, C(CH₃)₃), 37,49 (dd, ¹*J*_{PC} = 10,4 Hz, 3*J*_{PC} = 4,7 Hz, C(CH₃)₃), 54,88 (m, N = 75,5 Hz, CH₂-Ph), 114,17 (d, ³*J*_{PC} = 4,7 Hz, *o*-C Benzyl), 118,48 (s, *p*-C [B(C₆H₃{CF₃}₂)₄]), 125,42 (q, ¹*J*_{CF} = 271,82 Hz, CF₃), 128,66 (*p*-C Benzyl), 129,98 (qm, ²*J*_{CF} = 31 Hz, *m*-C [B(C₆H₃{CF₃}₂)₄]), 135,58 (s, *o*-C [B(C₆H₃{CF₃}₂)₄]), 136,64 (d, *J* = 1,9 Hz, m-C Benzyl), 162,64 (q, ¹*J*_{CB} = 49,9 Hz, *i*-C [B(C₆H₃{CF₃}₂)₄])
IR (KBr): ν [cm⁻¹] = 2966 w, 1611 w, 1476 w, 1355 m, 1277 s, 1168 m, 1131 s, 888 w, 839 w, 807 w, 757 w, 745 w, 716 w, 682 m, 670 m.
MS (LT-FAB⁺): m/z = 453,2 [K⁺] mit korrektem Isotopenmuster

### Synthesebeispiel 1.3

### Synthese von (η³-Benzyl) [bis(dicyclohexylphosphino)methan-κ²P]nikkel(II)-tetrakis[3,5-bis(trifluormethyl)phenyl]borat, [(dcpm-κ²P)Ni(η³-CH₂Ph]⁺ [B(C₆H₃{CF₃}₂)₄]⁻

### 1.3.1. Synthese von Dichloro[bis(dicyclohexylphosphino)methan-κ²P]nickel(II), (dcpm-κ²P)NiCl₂

1,3 g (6,90 mmol) NiCl₂ wurden mit 50 ml Ethanol versetzt. Die Suspension wurde kurz zum Sieden erhitzt, wobei das NiCl₂ in Lösung ging. Dann wurden 3,0 g (7,34 mmol) Bis(dicyclohexylphosphino)methan (dcpm) zugegeben und erneut bis zum beginnenden Sieden erhitzt. Die Lösung wurde tiefrot. Sie wurde noch 2 Stunden am Rückfluss gekocht und danach langsam abgekühlt. Dabei kristallisierte das Produkt aus. Die Mutterlauge wurde abgehebert, am Vakuum eingeengt, die ausgefallenen Kristalle mit den anderen vereinigt und getrocknet.

Ausbeute: 2,9 g (70%)

| Elementaranalyse für C₂₅H₄₆P₂NiCl₂: | | | | |
|---|---|---|---|---|
| ber. | C: 55,79 | H: 8,62 | Cl: 13,18 | P: 11,51 |
| gef. | C: 55,62 | H: 8,74 | Cl: 13,19 | P: 11,54 |

Schmelzpunkt: 347°C (Zersetzung)
¹H-NMR (300 MHz, CDCl₃, T = 298 K): δ =1,2-2,6 (6 m, Cy-H, P-CH₂-P, 46)
³¹P-NMR (122 MHz, CDCl₃, T = 298 K): δ = -24,06 (s)
¹³C-NMR (75 MHz, CDCl₃, T = 298 K) : δ = 13,6 (t, ¹*J*_{PC} = 20,3 Hz, P-CH₂-P), 25,7(s, Cy-C), 26,6 (s, Cy-C), 27,0(s, Cy-C), 27,8(s, Cy-C), 29,0 (s, Cy-C), 34,9 (s, Cy-C)
IR (KBr): ν [cm⁻¹] = 2921 (s) 2854 (s), 2358 (w), 1449 (m), 1326 (w), 1294 (w) , 1264 (w) , 1204 (w), 1179 (w), 1111 (w), 1069 (m), 1046 (w), 1026 (w), 996 (w), 915 (w), 885 (w), 850 (w), 820 (w), 774 (w), 746 (w), 708 (w), 684 (w), 655 (w), 530 (w), 510 (w), 462 (w)
MS (LT-FAB+): m/z = 536 [M]⁺ (korrektes Isotopenmuster), 501 [M-Cl]⁺ (korrektes Isotopenmuster

### 1.3.2. Synthese von Dibenzyl[bis(dicyclohexylphosphino)methan-κ²P]nickel(II), (dcpm-κ²P)NiBn₂

200 mg (0,37 mmol) (dcpm-κ²*P*)NiCl₂ wurden in Pentan suspendiert. Bei Raumtemperatur wurden 0,74 ml (0,74 mmol) einer Lösung von PhCH₂MgCl (1M in Diethylether) zugegeben. Nach 30 min färbte sich die Lösung rötlich. Um von entstandenem Magnesiumchlorid abzutrennen, wurde das Produkt in Toluol aufgenommen und über Celite® filtriert.

Ausbeute: 175,2 mg (73%)

| | | | | |
|---|---|---|---|---|
| Elementaranalyse für C₃₉H₆₀P₂Ni: | ber.: | C: 72,12 | H: 9,31 | P: 9,54 |
| | gef.: | C: 72,29 | H: 9,48 | P: 9,39 |

Schmelzpunkt: 96 °C (Zersetzung)

¹H-NMR-Spektrum (500 MHz, C₆D₆, T = 298 K): δ = 1,16 (quintett, ³*J*_{HH} = 9,00 Hz, 16H, Cy-H), 1,36 (t, ³*J*_{HH} = 11,50 Hz, 8H, Cy-H), 1,74 (quintett, ³*J*_{HH} = 7 ,00 Hz, 16 H, Cy-H), 2,10 (d, ²*J*_{PH} = 11,75 Hz, 6H, Cy-H), 2,69 (s, 4 H, CH₂-Ph), 7,04 (t, ³*J*_{HH} = 7,35 Hz, 2 H, C_{*para*}-H), 7,24 (t, ³*J*_{HH} = 7,70 Hz, 4 H, C_{*meta*}-H), 7,49 (d, ³*J*_{HH} = 7,70 Hz, 4 H, C_{*ortho*}-H)
³¹P-NMR-Spektrum (122 MHz, C₆D₆, T = 298 K): δ = -4,13 s
¹³C-NMR (126 MHz, C₆D₆, T = 298 K): δ = 17,03 (t, ¹*J*_{PC} = 14,1 Hz, P-CH₂-P), 26,73 (s, Cy-C), 27,59 (s, Cy-C), 27,80 (m, Cy-C), 29,28 (s, Cy-C), 30,41 (Cy-C), 34,83 (m, P-CH), 120,95 (s, *o*-C Benzyl), 128,94 (s, *m*-C Benzyl), 129,47 (s, *p*-C Benzyl), 155,35 (s, *i*-C Benzyl)
IR (KBr): ν [cm⁻¹] = 3061 (w), 3027 (w), 2927 (s) ,2825 (m), 2361 (s) , 2342 (m), 1449 (w), 1262 (m), 1217 (w), 1161 (m), 1098 (s), 1022 (s) , 889 (w), 855 (w), 800 (s) , 698 (m), 669 (w)
MS (LT-FAB⁺): m/z = 557 [M+H-Toluol]⁺ mit korrektem Isotopenmuster

### 1.3.3. Synthese von

### (η³-Benzyl) [bis(dicyclohexylphosphino)methan-κ²P]nickel(II)-tetrakis[3,5-bis(trifluormethyl)phenyl]borat, [(dcpm-κ²P)Ni(η³-CH₂Ph]⁺ [B(C₆H₃{CF₃}₂)₄]⁻

20 mg (30,8 µmol) (dcpm-κ²*P*)NiBn₂ wurden in 10 ml Diethylether suspendiert und auf -60 C gekühlt. 31,2 mg (30,8 mol) [H(OEt₂)₂] [B(C₆H₃{CF₃}₂)₄] wurden in 5 ml Diethylether gelöst und bei -60 C zur Suspension zugegeben. Die Lösung wurde langsam auf Raumtemperatur aufgewärmt. Nach 24 Stunden bei Raumtemperatur ist die Lösung orange. Durch Zugabe von Pentan kann das Produkt kristallisiert wurden. Es wurde einmal aus Ether/Pentan umkristallisiert.

Ausbeute: 24 mg (55%)

Schmelzpunkt: 167°C (Zersetzung)

| | | | | |
|---|---|---|---|---|
| Elementaranalyse von C₆₄H₆₅P₂F₂₄BNi | ber. | C: 54,07 | H: 4,61 | P: 4,36 |
| | gef. | C: 53,86 | H: 4,96 | P: 4,38 |

¹H-NMR-Spektrum (500 MHz, CD₂Cl₂, T = 298 K): δ = 1,0 - 2,1 (9 m, 44 H, Cy-H), 2, 30 (d, ³*J*_{PH} = 4,7 Hz, 2 H, CH₂-Ph), 2,59 (t, ²*J*_{PH} = 9,0 Hz, 2 H, P-CH₂-P), 6,33 (d, ³*J*_{HH} = 7,3 Hz, 2 H, o-H Benzyl), 7,30 (m, 1 H, *p*-H Benzyl), 7,56 (s, 4 H, *p*-H [B(C₆H₃{CF₃}₂)₄]), 7,61 (t, ³*J*_{HH} = 7,7 Hz, 2 H, *m*-H Benzyl), 7,72 (s, 8 H, *o*-H [B(C₆H₃{CF₃}₂)₄])
³¹P-NMR (122 MHz, D₆-Aceton, T = 298 K): δ = -3,5 (d, ²*J*_{PP} = 37,9 Hz), 12,6 (d, ²*J*_{PP} = 37,9 Hz)
13C-NMR (75 MHz, D₆-Aceton, T = 298 K): δ = 19,56 (t, ¹*J*_{PC} = 20,9 Hz, P-CH₂-P), 25,20 (s, Cy-C), 25,34 (Cy-C), 26,40 (m, 2 Cy-C), 28,55 (m, 2 Cy-C), 33,80 (dd, ¹*J*_{PC} = 12,6 Hz, 3*J*_{PC} = 4,4 Hz, C1-Cy), 34,94 (dd, ²*J*_{PC} = 24,7 Hz, ²*J*_{PC} = 3,3 Hz, CH₂-Benzyl), 35,45 (dd, ¹*J*_{PC} = 16,5 Hz, ³*J*_{PC} = 5,5 Hz, C1-Cy), 112,22 (d, ²*J*_{PC} = 7,7 Hz, *o*-C Benzyl), 117,12 (m, i-C Benzyl), 117,45 (m, *p*-C [B(C₆H₃{CF₃}₂)₄]), 126,82 (m, *p*-C Benzyl), 134,57 (s, *o*-C [B(C₆H₃{CF₃}₂)₄]), 135,68 (s, m-C Benzyl)

### Synthesebeispiel 1.4:

### Synthese von (η³-Benzyl) [bis(dicyclohexylphosphino)methan-κ²P]nikkel(II)-tetrafluoroborat [(dcpm-κ²P)Ni(η³-CH₂Ph]⁺[BF₄]⁻ (Formel 4)

10,4 mg (16,0 µmol) (dcpm-κ²*P*)NiBn₂, (Darstellung Beispiel 1.3.2.) wurden in 3 ml Diethylether suspendiert und 2,2 µl einer 54% etherischen HBF₄-Lösung zugefügt. Nach 24 Stunden hatte sich ein hellorangener Niederschlag gebildet, und die Lösung war schwachgelb. Die Lösung wurde abgehebert und der Niederschlag einmal mit 1 ml Pentan gewaschen.

Trocknung am Hochvakuum liefert 8,5 mg (82%) Produkt.

Zur Reaktionskontrolle wurde das Produkt in D₈-THF aufgenommen und NMR-spektroskopisch vermessen.

### 2. Polymerisationsbeispiele

### Die Reihenfolge der Polymerisationsbeispiele entspricht der Reihenfolge der Polymerisationen

Die ionischen Metallverbindungen der Synthesebeispiele 1.1 bis 1.3 wurden in einen 10-ml-Glasautoklav eingewogen. Es wurden 5 ml Diethylether zugegeben und die Lösung auf die gewünschte Temperatur temperiert (zur Wärmeabfuhr ein Wasserbad benutzt). Der Autoklav wurde mehrmals mit Ethylen gespült und unter 5 bar Ethylendruck gesetzt.

Nach Ablauf der Polymerisationsreaktion wurde der Autoklav entspannt und das Polymer abfiltriert. Das Polymer wurde mehrfach mit Diethylether und Aceton gewaschen und bei 70°C getrocknet.

Die ionische Metallverbindung aus Synthesebeispiel 1.4. wurde wie folgt verarbeitet:

Die aus der NMR-Untersuchung gewonnene Lösung wurde mit 5 ml Methylenchlorid verdünnt und in den Glasautoklaven gegeben. 10 bar Ethylen wurden bei Raumtemperatur aufgepresst und 24 Stunden polymerisiert. Der Druck wurde nachgeregelt, schwankt jedoch zwischen 8 und 10 bar.

Das Polymer wurde durch mehrfaches Waschen mit Aceton und Trocknung bei 70°C aufgearbeitet.

Ausbeute: 530 mg

**Tabelle 1**

| Nr. | Ionische Metallverbindung | Einwaage [mg] | [µmol] | T [°C] | Druck [bar] | t [h] | PE [mg] |
|---|---|---|---|---|---|---|---|
| 1a | (dtbpm)NiStilbenyl⁺ [B(C₆H₃{CF₃}₂)₄]⁻ | 18,6 | 12 | 44 | 7 | 3 | 665 mg |
| 2a | (dtbpm)NiBn⁺ [B(C₆H₃{CF₃}₂)₄]⁻ | 3,3 | 2,5 | 40 | 10 | 6 | 84 mg |
| 3a | (dcpm)NiBn⁺ [B(C₆H₃{CF₃}₂)₄]⁻ | 7,4 | 5,2 | 40 | 10 | 3,5 | 129 mg |
| 4a | (dcpm)NiBn⁺ BF₄⁻ | 8,5 | 13,2 | 25 | 10 | 24 | 530 mg |

### 3. Polymeranalytik

Die Polymerisationen mit Hilfe der Benzylkomplexe, deren analytische Daten nachfolgend aufgeführt sind, wurden bei Raumtemperatur durchgeführt. Die sonstige vorgehensweise entsprach der oben angeführten Vorschrift.

Der Gehalt und das Substitutionsmuster der Doppelbindungen wurde durch IR-Spektroskopie bestimmt, die Molekulargewichte der Polyethylene durch GPC. Die Polymerviskosität wurde nach ISO 1628-3 bestimmt. Die Ergebnisse sind in Tabelle 2 zusammengefasst.

**Tabelle 2**

| Beispiel | 1b | 2b | 3b |
|---|---|---|---|
| | (dtbpm) NiBn ⁺ | (dtbpm) Ni (1-Benzyl)benzyl⁺ | (dcpm)NiBn⁺ |
| h (dl/g) | 2,25 | 2,53 | 0,36 |
| M_{w} (g/mol) | 167917 | 182137 | 10825 |
| Mₙ (g/mol) | 59110 | 73590 | 3365 |
| Q | 2,84 | 2,48 | 3,22 |
| Smp. [°C] | 134,9 | n.b. | 124 |
| Trans-Vinylen (1/1000) | 0,19 | 0,07 | 0,23 |
| Vinyl (1/1000) | 0,12 | 0,05 | 3,11 |
| Vinyliden (1/1000) | 0,06 | 0,08 | 0,49 |
| Gesamt-CH₃, (1/1000) | 1 | 1 | 6 |
| Q: Polydispersität | | | |

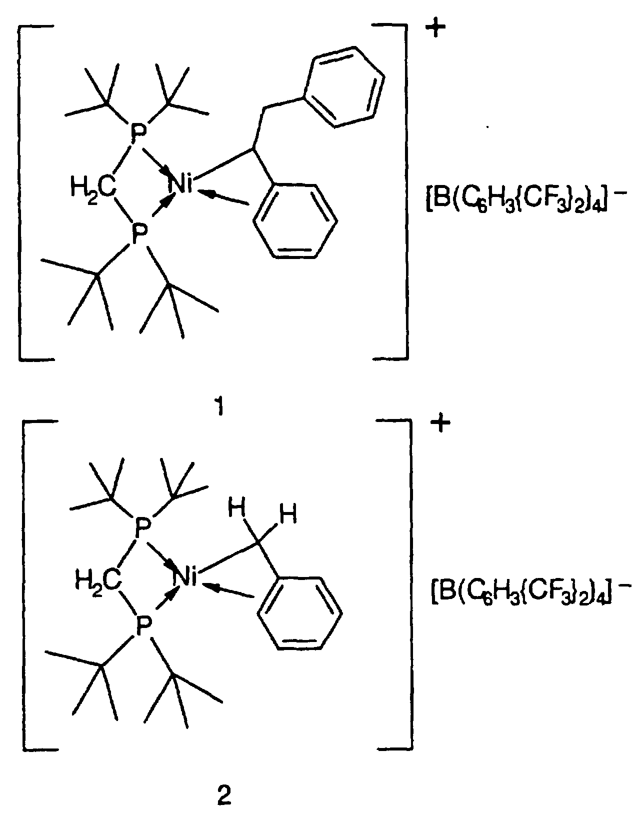

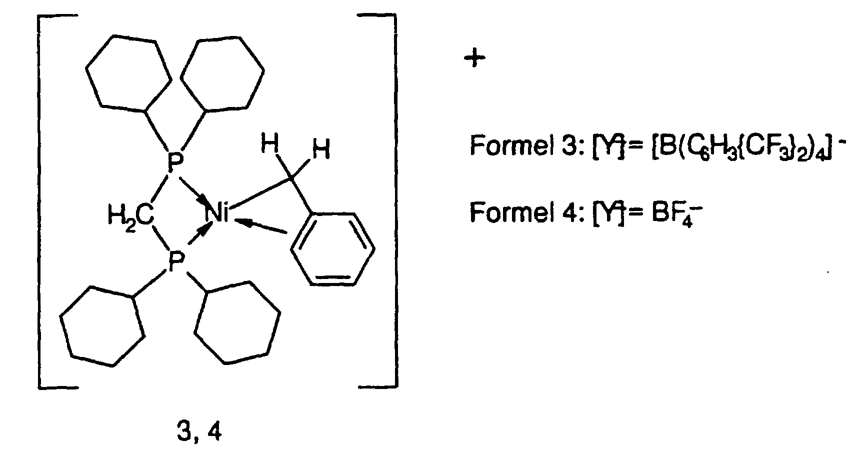

## Patentansprüche

1. Metallverbindung der allgemeinen Formel I, 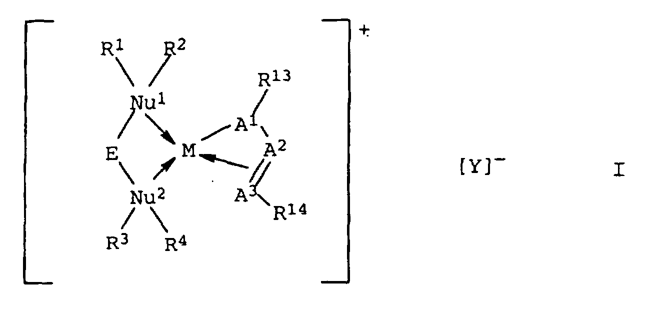 in der die Variablen wie folgt definiert sind:
M Ni in der Oxidationsstufe +II;
Nu¹, Nu² P,
E 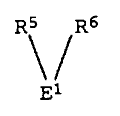
und dabei
E¹ ausgewählt aus C, Si oder Ge;
R¹ bis R⁶ unabhängig voneinander ausgewählt aus
Wasserstoff,
C₁-C₈-Alkyl, substituiert oder unsubstituiert,
C₂-C₈-Alkenyl, substituiert oder unsubstituiert, mit ein bis 4 isolierten oder konjugierten Doppelbindungen;
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy, substituiert oder unsubstituiert,
C₆-C₁₄-Aryloxy,
SiR¹⁸R¹⁹R²⁰ oder O-SiR¹⁸R¹⁹R²⁰, wobei R¹⁸-R²⁰ ausgewählt werden aus Wasserstoff, C₁-C₈-Alkyl, C₃-C₁₂-Cycloalkyl, C₇-C₁₃-Aralkyl oder C₆-C₁₄-Aryl;
fünf- bis sechsgliedrigen stickstoffhaltigen Heteroarylresten, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹⁸R¹⁹R²⁰ oder O-SiR¹⁸R¹⁹R²⁰, wobei R¹⁸-R²⁰ ausgewählt werden aus Wasserstoff, C₁-C₈-Alkyl, C₃-C₁₂-Cycloalkyl, C₇-C₁₃-Aralkyl oder C₆-C₁₄-Aryl;
wobei räumlich benachbarte Reste R¹ bis R⁶ unter Einbeziehung von E miteinander zu einem gesättigten oder olefinisch ungesättigten 5- bis 12-gliedrigen Ring verbunden sein können;
A¹, A³ ausgewählt aus C-R¹⁵, C-R¹⁶, Si-R¹⁵, Si-R¹⁶ oder N,
A² ausgewählt aus C-R¹⁷, Si-R¹⁷ oder N,
wobei höchstens ein A^{j} ein Stickstoffatom ist und j = 1, 2, 3;
R¹³ bis R¹⁷ ausgewählt aus
Wasserstoff,
C₁-C₈-Alkyl, substituiert oder unsubstituiert,
C₂-C₈-Alkenyl, substituiert oder unsubstituiert, mit ein bis 4 isolierten oder konjugierten Doppelbindungen;
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹⁸R¹⁹R²⁰ oder O-SiR¹⁸R¹⁹R²⁰, wobei R¹⁸-R²⁰ ausgewählt werden aus Wasserstoff, C₁-C₈-Alkyl, C₃-C₁₂-Cycloalkyl, C₇-C₁₃-Aralkyl oder C₆-C₁₄-Aryl;
fünf- bis sechsgliedrigen stickstoffhaltigen Heteroarylresten, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹⁸R¹⁹R²⁰ oder O-SiR¹⁸R¹⁹R²⁰, wobei R¹⁸-R²⁰ ausgewählt werden aus C₁-C₈-Alkyl, C₃-C₁₂-Cycloalkyl, C₇-C₁₃-Aralkyl oder C₆-C₁₄-Aryl;
wobei R¹³ bis R¹⁷ unter Einbeziehung eines oder mehrerer Atome A^{j} einen gesättigten oder ungesättigten 5- bis 12-gliedrigen Ring bilden können,
und [Y]⁻ ein Anion ist.

2. Metallverbindung gemäß Anspruch 1, bei der E¹ Kohlenstoff und R¹ und R², R³ und R⁴ sowie R⁵ und R⁶ jeweils gleich sind.

3. Metallverbindung gemäß den Ansprüchen 1 bis 2, in denen die Variablen wie folgt definiert sind:
[Y]⁻ ausgewählt aus BF₄⁻, [BAr₄]⁻, PF₆⁻, AsF₆⁻, SbF₆⁻, ClO₄⁻, CF₃SO₃⁻ oder CF₃CO₂⁻, wobei
Ar aromatische C₆-C₁₄-Reste bezeichnet, die gleich oder verschieden sein können und ein- oder mehrfach substituiert mit Halogen, C₁-C₈-Alkyl oder C₆-C₁₄-Aryl, die ihrerseits ein- oder mehrfach mit Halogen oder CN substituiert sein können;
R¹ bis R⁶ ausgewählt aus
Wasserstoff,
C₁-C₈-Alkyl, substituiert oder unsubstituiert,
C₂-C₈-Alkenyl, substituiert oder unsubstituiert, mit ein bis 4 isolierten oder konjugierten Doppelbindungen;
C₆-C₁₄-Aryl, unsubstituiert oder einfach oder mehrfach gleich oder verschieden substituiert mit C₁-C₈-Alkyl, substituiert oder unsubstituiert,
wobei benachbarte Reste R¹ bis R⁶ miteinander unter Einbeziehung von E zu einem gesättigten oder ungesättigten 5- bis 12-gliedrigen Ring verbunden sein können;
A¹, A³ ausgewählt aus C-R¹⁵, C-R¹⁶, Si-R¹⁵ oder Si-R¹⁶,
A² ausgewählt aus C-R¹⁷ oder Si-R¹⁷,
R¹³ bis R¹⁷ ausgewählt aus
Wasserstoff,
C₁-C₈-Alkyl, substituiert oder unsubstituiert,
C₂-C₈-Alkenyl, substituiert oder unsubstituiert, mit ein bis 4 isolierten oder konjugierten Doppelbindungen;
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit C₁-C₈-Alkyl, substituiert oder unsubstituiert,
wobei R¹³ bis R¹⁷ unter Einbeziehung eines oder mehrerer Atome A^{j} einen gesättigten oder ungesättigten 5- bis 12-gliedrigen Ring bilden können.

4. Metallverbindung gemäß den Ansprüchen 1 bis 3 mit BF₄⁻ als Anion, bei der die Variablen wie folgt definiert sind:
R¹ bis R⁴ tert.-Butyl oder Cyclohexyl,
R⁵, R⁶, R¹³ Wasserstoff,
A¹, A², A³ C-H.

5. Metallverbindung gemäß den Ansprüchen 1 bis 3 mit BF₄⁻ als Anion, bei der die Variablen wie folgt definiert sind:
R¹ bis R⁴ tert.-Butyl oder Cyclohexyl,
R⁵, R⁶, R¹³ Wasserstoff,
A¹, A³ C-H,
A² C-R¹⁷, und R¹⁴ und R¹⁷ bilden zusammen eine 1,3-Butadien-1,4-diyleinheit.

6. Verfahren zur Polymerisation oder Copolymerisation von Olefinen unter Verwendung einer Metallverbindung gemäß den Ansprüchen 1 bis 5.

7. Verfahren nach Anspruch 6, wobei die Polymerisation oder Copolymerisation von Olefinen in Substanz, in der Gasphase oder in Suspension unter Verwendung eines Trägerkatalysators erfolgt, welcher durch Abscheidung einer oder mehrerer Metallverbindungen gemäß einem der Ansprüchen 1 bis 5 auf einem festen Trägermateiral erhalten wurde.

8. Verfahren zur Herstellung einer ionischen Metallverbindung gemäß den Ansprüchen 1 bis 5, **dadurch gekennzeichnet, dass** man eine Metallkomplexverbindung der allgemeinen Formel II, 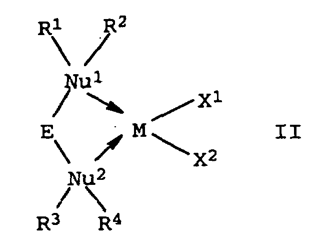 in der die Variablen R¹ bis R⁴, Nu¹, Nu², E und M die in Anspruch 1 genannte Bedeutung haben und in der X¹ und X² für Halogen steht, und mit zwei Äquivalenten einer Verbindung der allgemeinen Formel III a oder mindestens einem Äquivalent einer Verbindung der allgemeinen Formel III b 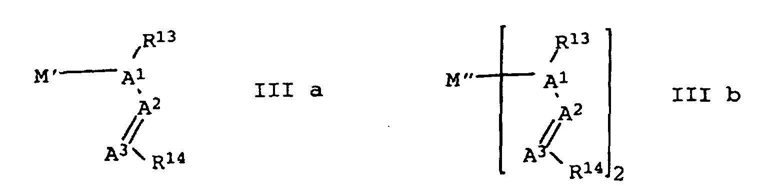 umsetzt, wobei die Variablen wie folgt definiert sind:
M' ausgewählt aus Li, Na, K, Rb, Cs oder MgX³;
M'' ausgewählt aus Mg oder Ca,
X³ ausgewählt aus Chlor oder Brom oder Iod;
und anschließend durch Zugabe eines Äquivalents eines Derivats des Anions [Y]⁻ ein Äquivalent des Anions der Verbindung III abspaltet, wobei als Derivat des Anions [Y]⁻ entweder die Säure H-Y oder Salze von [Y]- mit Brønstedsauren Kationen verwendet werden.

9. Verfahren nach Anspruch 8, **dadurch gekennzeichnet, dass** als Brønsted-saure Kationen Oxoniumionen oder Ammoniumionen eingesetzt werden.

## Claims

1. A metal compound of the formula I, 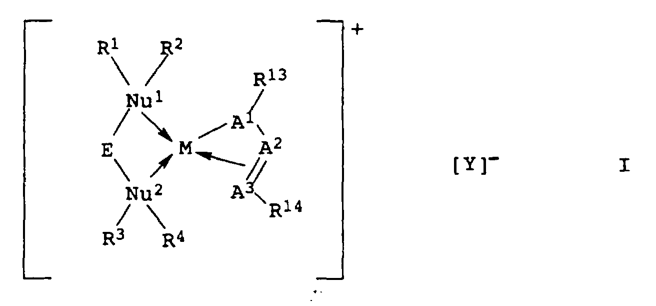 where the variables are defined as follows:
M is Ni in the oxidation state +II;
Nu¹, Nu² are P,
E is 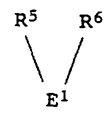
and
E¹ is selected from among C, Si and Ge;
R¹ to R⁶ are selected independently from among
hydrogen,
C₁-C₈-alkyl, substituted or unsubstituted,
C₂-C₈-alkenyl, substituted or unsubstituted, having from one to 4 isolated or conjugated double bonds;
C₃-C₁₂-cycloalkyl, substituted or unsubstituted,
C₇-C₁₃-aralkyl,
C₆-C₁₄-aryl, unsubstituted or monosubstituted or polysubstituted by identical or different substituents selected from among
C₁-C₈-alkyl, substituted or unsubstituted,
C₃-C₁₂-cycloalkyl,
C₇-C₁₃-aralkyl,
C₆-C₁₄-aryl,
halogen,
C₁-C₆-alkoxy, substituted or unsubstituted,
C₆-C₁₄-aryloxy,
SiR¹⁸R¹⁹R²⁰ and O-SiR¹⁸R¹⁹R²⁰, where R¹⁸-R²⁰ are selected from among hydrogen, C₁-C₈-alkyl, C₃-C₁₂-cycloalkyl, C₇-C₁₃-aralkyl and C₆-C₁₄-aryl;
five- to six-membered nitrogen-containing heteroaryl radicals, unsubstituted or monosubstituted or polysubstituted by identical or different substituents selected from among
C₁-C₈-alkyl, substituted or unsubstituted,
C₃-C₁₂-cycloalkyl,
C₇-C₁₃-aralkyl,
C₆-C₁₄-aryl,
halogen,
C₁-C₆-alkoxy,
C₆-C₁₄-aryloxy,
SiR¹⁸R¹⁹R²⁰ and O-SiR¹⁸R¹⁹R²⁰, where R¹⁸-R²⁰ are selected from among hydrogen, C₁-C₈-alkyl, C₃-C₁₂-cycloalkyl, C₇-C₁₃-aralkyl and C₆-C₁₄-aryl;
where adjacent radicals R¹ to R⁶ together with E may be joined to form a saturated or olefinically unsaturated 5- to 12-membered ring;
A¹, A³ are selected from among C-R¹⁵, C-R¹⁶, Si-R¹⁵, Si-R¹⁶ and N,
A² is selected from among C-R¹⁷, Si-R¹⁷ and N,
where not more than one A^{j} is a nitrogen atom and j = 1, 2, 3;
R¹³ to R¹⁷ are selected from among
hydrogen,
C₁-C₈-alkyl, substituted or unsubstituted,
C₂-C₈-alkenyl, substituted or unsubstituted, having from one to 4 isolated or conjugated double bonds;
C₃-C₁₂-cycloalkyl, substituted or unsubstituted,
C₇-C₁₃-aralkyl,
C₆-C₁₄-aryl, unsubstituted or monosubstituted or polysubstituted by identical or different substituents selected from among
C₁-C₈-alkyl, substituted or unsubstituted,
C₃-C₁₂-cycloalkyl,
C₇-C₁₃-aralkyl,
C₆-C₁₄-aryl,
halogen,
C₁-C₆-alkoxy,
C₆-C₁₄-aryloxy,
SiR¹⁸R¹⁹R²⁰ and O-SiR¹⁸R¹⁹R²⁰, where R¹⁸-R²⁰ are selected from among hydrogen, C₁-C₈-alkyl, C₃-C₁₂-cycloalkyl, C₇-C₁₃-aralkyl and C₆-C₁₄-aryl;
five- to six-membered nitrogen-containing heteroaryl radicals, unsubstituted or monosubstituted or polysubstituted by identical or different substituents selected from among
C₁-C₈-alkyl, substituted or unsubstituted,
C₃-C₁₂-cycloalkyl,
C₇-C₁₃-aralkyl,
C₆-C₁₄-aryl,
halogen,
C₁-C₆-alkoxy,
C₆-C₁₄-aryloxy,
SiR¹⁸R¹⁹R²⁰ and O-SiR¹⁸R¹⁹R²⁰, where R¹⁸-R²⁰ are selected from among C₁-C₈-alkyl, C₃-C₁₂-cycloalkyl, C₇-C₁₃-aralkyl and C₆-C₁₄-aryl;
where R¹³ to R¹⁷ together with one or more atoms A^{j} may form a saturated or unsaturated 5- to 12-membered ring,
and [Y]⁻ is an anion.

2. A metal compound as claimed in claim 1 in which E¹ is carbon and R¹ and R², R³ and R⁴ and also R⁵ and R⁶ are in each case identical.

3. A metal compound as claimed in any of claims 1 to 2 in which the variables are defined as follows:
[Y]⁻ is selected from among BF₄⁻, [BAr₄]⁻, PF₆⁻, AsF₆⁻, SbF₆⁻, ClO₄⁻, CF₃SO₃⁻ and CF₃CO₂⁻, where
Ar are C₆-C₁₄-aromatic radicals which may be identical or different and may be monosubstituted or polysubstituted by halogen, C₁-C₈-alkyl or C₆-C₁₄-aryl which may in turn be monosubstituted or polysubstituted by halogen or CN;
R¹ to R⁶ are selected from among
hydrogen,
C₁-C₈-alkyl, substituted or unsubstituted,
C₂-C₈-alkenyl, substituted or unsubstituted, having from one to 4 isolated or conjugated double bonds;
C₆-C₁₄-aryl, unsubstituted or monosubstituted or polysubstituted by identical or different, substituted or unsubstituted C₁-C₈-alkyl groups,
where adjacent radicals R¹ to R⁶ together with E may be joined to form a saturated or unsaturated 5- to 12-membered ring;
A¹, A³ are selected from among C-R¹⁵, C-R¹⁶, Si-R¹⁵ and Si-R¹⁶,
A² is selected from among C-R¹⁷ and Si-R¹⁷,
R¹³ to R¹⁷ are selected from among
hydrogen,
C₁-C₈-alkyl, substituted or unsubstituted,
C₂-C₈-alkenyl, substituted or unsubstituted, having from one to 4 isolated or conjugated double bonds;
C₃-C₁₂-cycloalkyl, substituted or unsubstituted,
C₇-C₁₃-aralkyl,
C₆-C₁₄-aryl, unsubstituted or monosubstituted or polysubstituted by identical or different, substituted or unsubstituted C₁-C₈-alkyl groups,
where R¹³ to R¹⁷ together with one or more atoms A^{j} may form a saturated or unsaturated 5- to 12-membered ring.

4. A metal compound as claimed in any of claims 1 to 3 in which BF₄⁻ is present as anion and the variables are defined as follows:
R¹ to R⁴ are each tert-butyl or cyclohexyl,
R⁵, R⁶, R¹³ are each hydrogen,
A¹, A², A³ are each C-H.

5. A metal compound as claimed in any of claims 1 to 3 in which BF₄⁻ is present as anion and the variables are defined as follows:
R¹ to R⁴ are each tert-butyl or cyclohexyl,
R⁵, R⁶, R¹³ are each hydrogen,
A¹, A³ are each C-H,
A² is C-R¹⁷, and R¹⁴ and R¹⁷ together form a 1,3-butadiene-1,4-diyl unit.

6. A process for the polymerization or copolymerization of olefins using a metal compound as claimed in any of claims 1 to 5.

7. A process as claimed in claim 6, the polymerization or copolymerization of olefins in bulk, in the gas phase or in suspension using a supported catalyst which has been obtained by deposition of one or more metal compounds as claimed in any of claims 1 to 5 on a solid support material.

8. A process for preparing an ionic metal compound as claimed in any of claims 1 to 6, which comprises reacting a metal complex of the formula II, 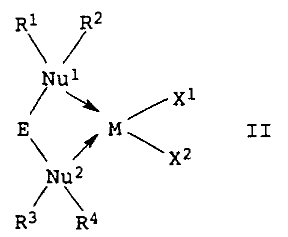 where the variables R¹ to R⁴, Nu¹, Nu², E and M are as defined in claim 1 and X¹ and X² are each halogen, with two equivalents of a compound of the formula III a or at least one equivalent of a compound of the formula III b 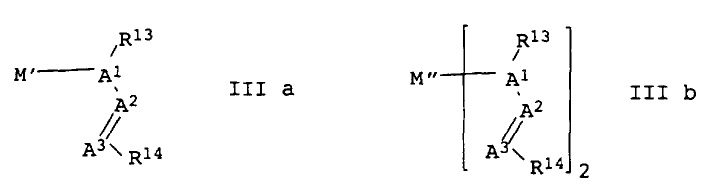 where the variables are defined as follows:
M' is selected from among Li, Na, K, Rb, Cs and MgX³;
M'' is selected from among Mg and Ca,
X³ is selected from among chlorine, bromine and iodine;
and subsequently adding one equivalent of a derivative of the anion [Y]⁻ to eliminate one equivalent of the anion of the compound III, where either the acid H-Y or salts of [Y]⁻ with Brønsted-acid cations are used as derivative of the anion [Y]-.

9. A process as claimed in claim 8, wherein oxonium ions or ammonium ions are used as Brønsted-acid cations.

## Revendications

1. Composé métallique de formule générale I, 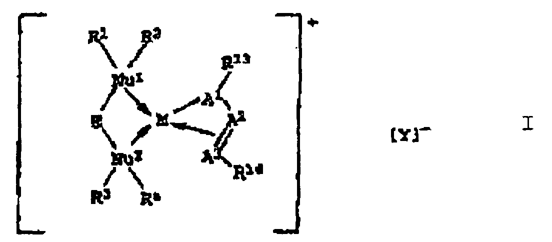 dans laquelle les variables sont définies comme suit :
M Ni dans l'étage d'oxydation +II
Nu¹ Nu² P
E 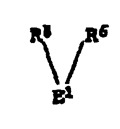
où
E¹ est sélectionné parmi C, Si ou Ge ;
R¹ à R⁶ sont sélectionnés indépendamment l'un de l'autre parmi
l'hydrogène,
un radical alkyle C₁-C₈, substitué ou non substitué,
un radical alcényle C₂-C₈, substitué ou non substitué, avec 1 à 4 doubles liaisons isolées ou conjuguées,
un radical cycloalkyle C₃-C₁₂, substitué ou non substitué,
un radical aralkyle C₇-C₁₃,
un radical aryle C₆-C₁₄, non substitué ou substitué une ou plusieurs fois, de manière identique ou différente, par
un radical alkyle C₁-C₈, substitué ou non substitué,
un radical cycloalkyle C₃-C₁₂,
un radical aralkyle C₇-C₁₃,
un radical aryle C₆-C₁₄,
un halogène,
un radical alcoxy C₁-C₆, substitué ou non substitué,
un radical aryloxy C₆-C₁₄,
un radical SiR¹⁸R¹⁹R²⁰ ou O-SiR¹⁸R¹⁹R²⁰, R¹⁸-R²⁰ étant sélectionnés parmi l'hydrogène, un radical alkyle C₁-C₈, cycloalkyle C₃-C₁₂, aralkyle C₇-C₁₃ ou aryle C₆-C₁₄ ;
des radicaux hétéroaryliques azotés pentagonal à hexagonal, non substitués ou substitués une ou plusieurs fois, de manière identique ou différente, par
un radical alkyle C₁-C₈, substitué ou non substitué,
un radical cycloalkyle C₃-C₁₂,
un radical aralkyle C₇-C₁₃,
un radical aryle C₆-C₁₄,
un halogène,
un radical alcoxy C₁-C₆,
un radical aryloxy C₆-C₁₄,
un radical SiR¹⁸R¹⁹R²⁰ ou O-SiR¹⁸R¹⁹R²⁰, R¹⁸-R²⁰ étant sélectionnés parmi l'hydrogène, un radical alkyle C₁-C₈, cycloalkyle C₃-C₁₂, aralkyle C₇-C₁₃ ou aryle C₆-C₁₄ ;
les radicaux R¹ à R⁶ voisins spatialement pouvant être reliés l'un avec l'autre en intégrant E en un cycle saturé ou oléfiniquement insaturé pentagonal à dodécagonal ;
A¹, A³ sont sélectionnés parmi C-R¹⁵, C-R¹⁶, Si-R¹⁵, Si-R¹⁶ ou N,
A² est sélectionné parmi C-R¹⁷, Si-R¹⁷ ou N,
un A^{j} au maximum étant un atome d'azote et j = 1, 2, 3 ;
R¹³ à R¹⁷ sont sélectionnés parmi
l'hydrogène,
un radical alkyle C₁-C₈, substitué ou non substitué,
un radical alcényle C₂-C₈, substitué ou non substitué, avec 1 à 4 doubles liaisons isolées ou conjuguées,
un radical cycloalkyle C₃-C₁₂, substitué ou non substitué,
un radical aralkyle C₇-C₁₃,
un radical aryle C₆-C₁₄, non substitué ou substitué une ou plusieurs fois, de manière identique ou différente, par
un radical alkyle C₁-C₈, substitué ou non substitué,
un radical cycloalkyle C₃-C₁₂,
un radical aralkyle C₇-C₁₃,
un radical aryle C₆-C₁₄,
un halogène,
un radical alcoxy C₁-C₆,
un radical aryloxy C₆-C₁₄,
un radical SiR¹⁸R¹⁹R²⁰ ou O-SiR¹⁸R¹⁹R²⁰, R¹⁸-R²⁰ étant sélectionnés parmi l'hydrogène, un radical alkyle C₁-C₈, cycloalkyle C₃-C₁₂, aralkyle C₇-C₁₃ ou aryle C₆-C₁₄ ;
des radicaux hétéroarylique azotés pentagonal à hexagonal, non substitués ou substitués une ou plusieurs fois, de manière identique ou différente, par
un radical alkyle C₁-C₈, substitué ou non substitué,
un radical cycloalkyle C₃-C₁₂,
un radical aralkyle C₇-C₁₃,
un radical aryle C₆-C₁₄,
un halogène,
un radical alcoxy C₁-C₆,
un radical aryloxy C₆-C₁₄,
un radical SiR¹⁸R¹⁹R²⁰ ou O-SiR¹⁸R¹⁹R²⁰, R¹⁸-R²⁰ étant sélectionnés parmi un radical alkyle C₁-C₈, cycloalkyle C₃-C₁₂, aralkyle C₇-C₁₃ ou aryle C₆-C₁₄ ;
les radicaux R¹³ à R¹⁷ pouvant former un cycle saturé ou insaturé pentagonal à dodécagonal en incorporant un ou plusieurs atomes A^{j},
et [Y]⁻ est un anion.

2. Composé métallique selon la revendication 1, dans lequel E¹ est un carbone et R¹ et R², R³ et R⁴ ainsi que R⁵ et R⁶ sont respectivement identiques.

3. Composé métallique selon l'une des revendications 1 à 2, dans lequel les variables sont définies comme suit :
[Y]⁻ est sélectionné parmi BF₄⁻, [BAr₄]⁻, PF₆⁻, AsF₆⁻, SbF₆⁻, ClO₄⁻, CF₃SO₃⁻ ou CF₃CO₂⁻
dans lesquelles
Ar désigne des radicaux C₆-C₁₄ aromatiques qui peuvent être identiques ou différents et sont substitués une ou plusieurs fois par un halogène, un radical alkyle C₁-C₈ ou aryle C₆-C₁₄ qui, pour leur part, peuvent être substitués une ou plusieurs fois par un halogène ou CN ;
R¹ à R⁶ sont sélectionnés parmi
l'hydrogène,
un radical alkyle C₁-C₈, substitué ou non substitué,
un radical alcényle C₂-C₈, substitué ou non substitué, par 1 à 4 doubles liaisons isolées ou conjuguées,
un radical aryle C₆-C₁₄, non substitué ou substitué une ou plusieurs fois, de manière identique ou différente, par un radical alkyle C₁-C₈, substitué ou non substitué,
les radicaux R¹ à R⁶ voisins pouvant être reliés l'un avec l'autre en intégrant E en un cycle saturé ou insaturé pentagonal à dodécagonal ;
A¹, A³ sont sélectionnés parmi C-R¹⁵, C-R¹⁶, Si-R¹⁵ ou Si-R¹⁶,
A² est sélectionné parmi C-R¹⁷ ou Si-R¹⁷,
R¹³ à R¹⁷ sont sélectionnés parmi
l'hydrogène,
un radical alkyle C₁-C₈, substitué ou non substitué,
un radical alcényle C₂-C₈, substitué ou non substitué, présentant 1 à 4 doubles liaisons isolées ou conjuguées,
un radical cycloalkyle C₃-C₁₂, substitué ou non substitué,
un radical aralkyle C₇-C₁₃,
un radical aryle C₆-C₁₄, non substitué ou substitué une ou plusieurs fois, de manière identique ou différente, par un radical alkyle C₁-C₈, substitué ou non substitué,
les radicaux R¹³ à R¹⁷ pouvant former un cycle saturé ou insaturé pentagonal à dodécagonal en incorporant un ou plusieurs atomes A^{j}.

4. Composé métallique selon l'une des revendications 1 à 3 avec BF₄⁻ comme anion, dans lequel les variables sont définies comme suit :
R¹ à R⁴ désignent un radical tert.-butyle ou cyclohexyle,
R⁵, R⁶, R¹³ désignent l'hydrogène,
A¹, A², A³ désignent C-H .

5. Composé métallique selon l'une des revendications 1 à 3 avec BF₄⁻ comme anion, dans lequel les variables sont définies comme suit :
R¹ à R⁴ désignent un radical tert.-butyle ou cyclohexyle,
R⁵, R⁶, R¹³ désignent l'hydrogène,
A¹, A³ désignent C-H,
A² désigne C-R¹⁷ et R¹⁴ et R¹⁷ forment ensemble une unité 1,3-butadiène-1,4-diylique.

6. Procédé de polymérisation ou de copolymérisation d'oléfines mettant en oeuvre un composé métallique selon les revendications 1 à 5.

7. Procédé selon la revendication 6, dans lequel la polymérisation ou la copolymérisation des oléfines a lieu en masse, dans la phase gazeuse ou en suspension en mettant en oeuvre un catalyseur sur support, qui a été obtenu par dépôt d'un ou plusieurs composés métalliques selon l'une des revendications 1 à 5 sur un matériau de support fixe.

8. Procédé de préparation d'un composé métallique ionique selon les revendications 1 à 5, **caractérisé en ce que** l'on fait réagir un composé complexe métallique de formule générale II, 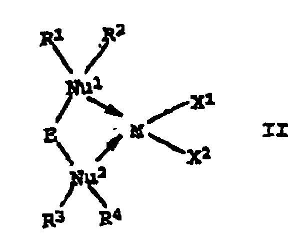 dans laquelle les variables R¹ à R⁴, Nu¹, Nu², E et M ont la signification spécifiée dans la revendication 1 et dans laquelle X¹ et X² désignent un halogène, avec deux équivalents d'un composé de formule générale IIIa ou au moins un équivalent d'un composé de formule générale IIIb 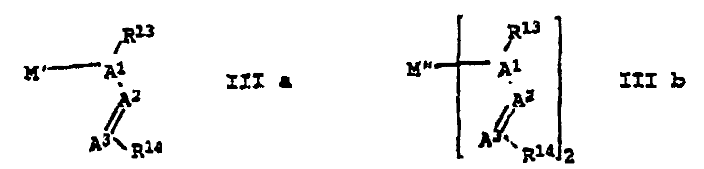 où les variables sont définies comme suit :
M' est sélectionnée parmi Li, Na, K, Rb, Cs ou MgX³,
M'' est sélectionnée parmi Mg ou Ca,
X³ est sélectionnée parmi le chlore, le brome ou l'iode ;
et, ensuite, on sépare un équivalent de l'anion du composé III par addition d'un équivalent d'un dérivé de l'anion [Y]⁻, l'acide H-Y ou des sels de [Y]⁻ avec des cations d'acides de Brønsted étant utilisés comme dérivé de l'anion [Y]⁻.

9. Procédé selon la revendication 8, **caractérisé en ce que** des ions d'oxonium ou des ions d'ammonium sont utilisés comme cations d'acide de Brønsted.
